# EUROPEAN PATENT SPECIFICATION

(11) **EP 2 666 571 B1**
(45) Date of publication and mention of the grant of the patent: **12.07.2017**
(21) Application number: 13169278.2
(22) Date of filing: 24.05.2013
(51) Int. Cl.: B23D 47/00, B23D 61/02

(54) **Rotary cutting blade for a power tool**
Drehschneidwerkzeug für ein Elektrowerkzeug
Lame de coupe rotative pour outil électrique

(30) Priority: 25.05.2012 GB 201209251
(43) Date of publication of application: 27.11.2013
(73) Proprietor: Marcrist International Limited, Doncaster DN3 1QR (GB)
(72) Inventor: Halbeisen, Mario, 6362 stansstad (CH)
(74) Representative: Loven, Keith James

(56) References cited:
- EP-A1- 1 316 379
- DE-A1- 2 907 923
- GB-A- 2 006 105
- JP-A- S60 123 215
- US-B1- 7 866 242

## Description

### Field of the Invention

The present invention relates to a rotary cutting blade for a power tool according to the preamble of claim 1.

### Background to the Invention

Such a blade is known from GB2006105A1. The use of diamond cutting discs is typically associated with two main issues which can have an adverse effect on health and the environment. Cutting through materials which are inherently hard and tough can result in significant noise and vibration.

Health and safety legislation, particularly in the UK, requires employers to minimise the exposure of their employees to loud noise and vibrations. There have been many damages claims over the past few years from employees suffering from vibration white finger and hearing loss due to activities undertaken during the course of their employment. A clear link has been shown between manual tasks such as use of a circular saw with these conditions. Symptoms are not always instantaneous, it can take many years of repeated power tool use before diagnosis of vibration and noise related disease.

The problem of excess noise and vibrations encountered during the use of cutting discs is well known and many attempts have been made to address the problems. Previous attempts fall into one of two categories: 1) cutting slots or holes into the blade core to prevent transmission of noise, or 2) constructing the blade core as a sandwich comprising two thin outer layers with a noise absorbing material between the outer layers.

EP0819491 (TRENTINUTENSIL) discloses a typical cutting disc having a plurality of shaped slots cut through its body. The shaped slots help limit the level of noise and vibration transmitted. Such an effect can be increased by filling the slots with a vibration dampening material.

CN2918017Y (QUANZHOU ZHONGZI DIAMOND TOOL) discloses a typical blade of sandwich construction comprising two outer steel layers with a layer of copper therebetween.

The use of either typical type of cutting blade inherently comes with disadvantages over standard blades which do not attempt to limit the level of noise and vibration generated. Single layer blades with a plurality of slots in the core, as shown in EP0819491, by their nature are less stable in the cut, i.e. less resistant to side pressure than a single layer blade without slots in the core.

Blades of sandwich construction are inherently more flexible than a standard blade of the same thickness. A flexible blade has poor side pressure resistant properties meaning that accidents are not uncommon and it can be difficult to make a straight cut. Each core is less than half the thickness of the total thickness of the blade to ensure that the blade is of comparable thickness to a standard blade. Combined with the flexible material located between the cores, the thin cores permit greater flexure than a standard single core cutting disc.

There exists the need for a cutting disc having good noise and vibration deadening properties while being sufficiently stiff for the purpose of making straight cuts through tough material accurately and safely.

### Summary of the Invention

The present invention provides a rotary cutting blade for a power tool, comprising a disc having one or more cutting elements arranged around the circumference thereof, the disc being of sandwich construction comprising a vibration dampening material sandwiched between two outer cores, the blade further comprising a reinforcing member secured to at least one face of the blade, whereby to reduce noise and vibration, the, or each, reinforcing member having a maximum diameter smaller than the diameter of the disc so that, in use, the disc cuts only in the region thereof radially outward from the reinforcing member or members.

Adding steel reinforcing members, or flanges, to the centre of the blade substantially increases the blade's stiffness and consequently resistance to bending. A more rigid blade reduces the risk of the blade becoming unstable and flexing which could cause the blade to jam in the material it is cutting.

The increased rigidity of the blade causes the blade to run smoother thus also reducing vibration and consequently the noise generated during cutting. Adding a reinforcing flange to the outer surface of the blade has surprisingly been found to reduce the noise level by 3 dB(A) which is equivalent to halving the noise output by the blade. Additionally, the lateral force required to deflect the blade by 2mm is 40% higher if a reinforcing member is fitted to the outer surface of each core.

Preferably, a layer of vibration dampening material will be located between the blade and reinforcing flange. This feature further reduces the vibration caused by the blade during cutting by absorbing some of the impact energy generated when cutting substrates such as concrete. The provision of a layer of vibration dampening material between the blade and reinforcing flange has been found to reduce the noise level generated by the blade during cutting by a further 3 dB(A). A 6 dB(A) reduction compared to a standard cutting disc of sandwich construction is equivalent to only 25% of the noise output by a standard cutting disc of sandwich construction.

It has been found that the inclusion of a vibration dampening material between the blade and reinforcing flange has a negligible impact on the stiffness of the cutting disc.

Preferably, the blade is adapted to be mounted on a spindle of the power tool by having a mounting hole, and wherein, in use, with the blade fitted on the spindle, one or more layers of vibration dampening material are located between the blade and the spindle. The one or more layers of vibration dampening material between the blade and the spindle are of varying thickness along the spindle and/or may be continuous with the one or more layers of vibration dampening material located between the, or each, reinforcing flange and the blade.

The vibration dampening material will preferably be a polymer, copper, bitumen, resin, plastic, alloy, or combinations thereof. It will be appreciated that each material has its own unique properties hence certain materials may be more suited towards certain applications than others.

The vibration dampening material located between the cores and the reinforcing flanges will preferably be of lesser diameter than the reinforcing flanges. This is necessary to permit reinforcing flanges to be welded or spot welded to the core.

Preferably, the reinforcing flanges will be circular so that there is a consistent distance between the circumference of the reinforcing flanges and the circumference of the blade.

Preferably, the blade and the, or each, reinforcing flange will be made from steel. Other materials may also be suitable but steel offers an acceptable degree of stiffness for the purpose of the applications this invention may be used in.

In some embodiments of the invention, the reinforcing flange may be constructed from a composite of materials with one or more layers of steel and vibration dampening material. Such a construction may further reduce the noise level output by the blade during cutting.

Some embodiments of the invention may also have a plurality of cut-outs through the reinforcing flanges. The cut-outs may be filled with vibration dampening material in order to further reduce noise and vibration levels.

The present invention provides a cutting blade of substantially greater stiffness than the prior art which additionally has a much lower noise output when in use. A consequential benefit of the invention is that accident and injury is less likely to occur due to the stiffness of the blade. It has been found that the stiffer the blade, the less prone the blade is to jamming in the work piece.

Reduction of vibration generated by the blade additionally reduces the vibration encountered through a power tool operators hands. In conjunction with shock absorbing methods employed on the power tools themselves, the present invention will assist in limiting the effect of "vibration white finger", a common industrial disease suffered by power tool operators.

### Brief Description of the Drawings

In the drawings, which illustrate exemplary embodiments of the invention:
Figure 1 is a vertical section view of a standard sandwich construction rotary cutting blade;
Figure 2 is a vertical section view of a first embodiment of the invention;
Figure 3 is a vertical section view of a second embodiment of the invention;
Figure 4 is a side view of a third embodiment of the invention; and
Figures 5 to 7 are vertical sectional views of variations of a fourth embodiment of the invention.
Figure 8 is an example not according to the invention.

### Detailed Description of the Illustrated Embodiment

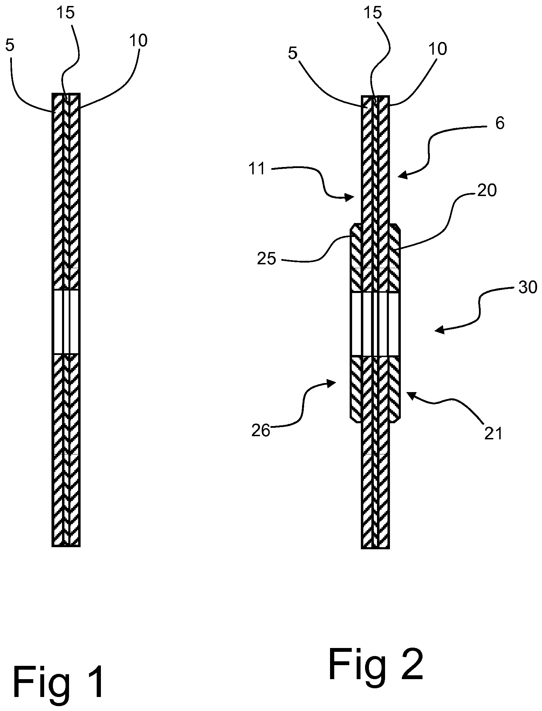

Referring to Figure 1, a rotary cutting disc of typical sandwich construction, comprises two steel layers 5, 10, known as cores, between which is sandwiched a layer of vibration dampening material 15. It will be appreciated that where the material is referred to as steel, any other suitable material could be used. The cores in a typical sandwich construction cutting disc will be less than half the thickness of the total thickness of the blade to ensure that the blade is of comparable thickness to a standard blade. The vibration dampening material 15 is a type of rubber but it will be appreciated that any other suitable material could be used. The layers which make up the cutting disc are attached to one another by gluing, riveting, or similar.

Figure 2 shows a first embodiment of the invention, wherein a reinforcement flange 20, 25 is attached concentrically to each outer face 6, 11 of the cutting disc. The flanges 20, 25 are circular and are of sufficient thickness in order to add stiffness to the construction of the cutting disc. It will be appreciated that the diameter and type of cutting blade will determine the thickness of flange required. The flanges 20, 25 have a maximum diameter which is less than the diameter of the cutting disc so that, in use, the disc cuts only in the region thereof radially outwards from the reinforcing flanges 20, 25.

The flanges 20, 25 are made from steel and may be provided with a chamfered edge 21, 26. Both the flanges 20, 25 and the cores 5, 10 are provided with a centrally located mounting hole 30 to permit the disc to be mounted on a compatible power tool.

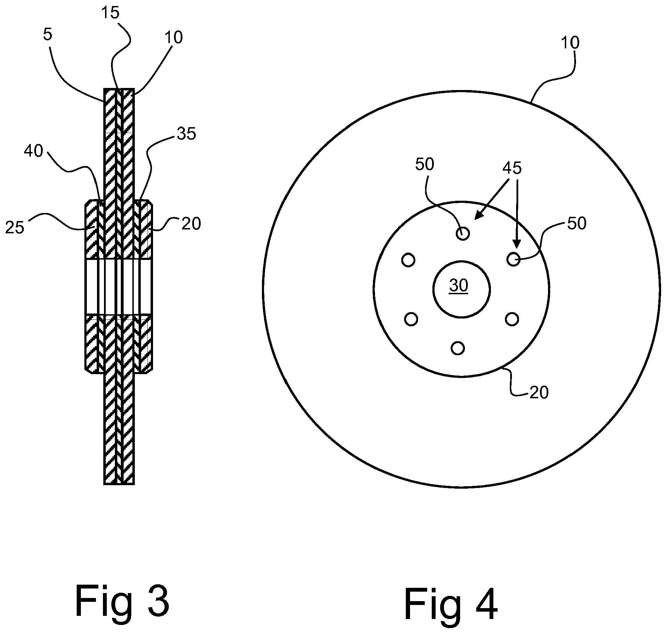

Figure 3 shows a second embodiment of the invention, wherein each reinforcement flange 20, 25 is provided with a vibration dampening material 35, 40, such as rubber, between the flange 20, 25 and the core 5, 10. Such a construction has been found to offer further reductions in noise levels.

Figure 4 shows a third embodiment of the invention wherein, each flange 20, 25 is further provided with a plurality of cut-outs 45 therethrough, each cutout 45 being filled with vibration dampening material 50.

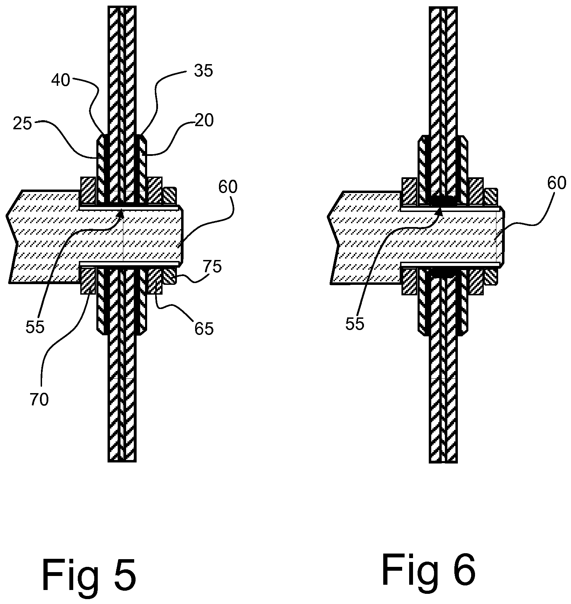

Figure 5 shows a fourth embodiment of the invention wherein, further vibration dampening material 55, such as rubber, is provided between the blade and a spindle 60 of a power tool (not shown) on which the disc is mounted. This vibration dampening material 55 is continuous with the vibration material 35, 40 between the flange 20, 25 and the core 5, 10. The blade is clamped on to the spindle 60 with tool flanges 65, 70 and a flange nut 75.

Figure 6 shows a variation on the fourth embodiment of the invention wherein the vibration dampening material 55 between the disc and the spindle 60 varies in thickness along the spindle.

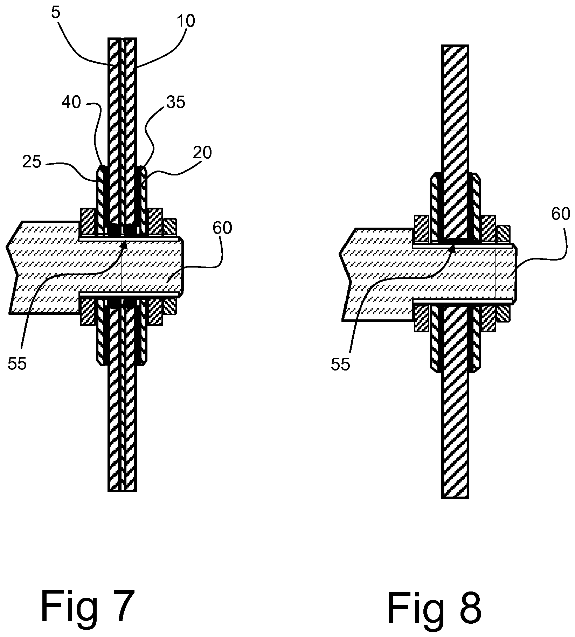

Figure 7 shows a further variation on the fourth embodiment of the invention wherein the vibration dampening material 55 between the disc and the spindle 60 not only varies in thickness along the spindle 60 but is also separate from the vibration dampening material 35, 40 between the flange 20, 25 and the core 5,10.

Figure 8 shows an example not according to the the invention used in conjunction with a standard, non-sandwich disc.

### Example

Testing was carried out using a standard 350mm diameter cutting disc on a table saw. The noise level (in dB(A)) was monitored and recorded using three different constructions of the same type of cutting disc. The disc constructions tested were:
(a) A standard cutting disc of sandwich construction having a layer of vibration dampening material 35, 40 sandwiched between two steel cores 5, 10;
(b) As (a) but with a reinforcing flange 20, 25 concentrically attached to the outer face 6, 11 of each core 5, 10;
(c) As (b) but with a layer of vibration dampening material 35, 40 fitted between the outer face 6, 11 of each core 5, 10 and reinforcing flange 20, 25.

The following noise levels (in dB(A)) were observed:
(a) 89 dB(A)
(b) 86 dB(A)
(c) 83 dB(A)

A reduction of 3 dB(A) is equivalent to halving the noise level. Effectively, this means that construction (b) reduced the noise level generated by a standard cutting disc by half and construction (c) generated a noise level just one quarter that of a standard cutting disc.

Each construction was also tested to identify how much force is required to be applied laterally to the cutting disc to cause a deflection of 2mm. Again, testing was conducted using a 350mm cutting disc used on a table saw. The following figures are indicative of the principles behind the invention but will change depending on the diameter of the cutting disc and its strength.
(a) 13.82kg
(b) 19.01 kg
(c) 18.84kg

The values experienced are not as high as the force required to deflect a standard cutting disc with a solid core 5, 10 by 2mm. However, the addition of a reinforcing flange 20, 25 to a cutting disc of sandwich construction offers an approximately 40% greater resistance to bending than a cutting disc of standard sandwich construction.

## Claims

1. A rotary cutting blade for a power tool, comprising a disc having one or more cutting elements arranged around the circumference thereof, the disc being of sandwich construction comprising a vibration dampening material (15) sandwiched between two outer cores (5,10), **characterised by** a reinforcing member (20,25) secured to at least one face of the blade, whereby to reduce noise and vibration, the, or each, reinforcing member (20,25) having a maximum diameter smaller than the diameter of the disc so that, in use, the disc cuts only in the region thereof radially outward from the reinforcing member or members (20,25).

2. A rotary cutting blade according to Claim 1, wherein one or more layers of vibration dampening material (35,40) are located between the, or each, reinforcing member (20,25) and the blade.

3. A rotary cutting blade according to Claim 1 or Claim 2, wherein the blade is adapted to fit on to a spindle (60) of the power tool by having a mounting hole (30), and wherein, in use, with the blade fitted on the spindle (60), one or more layers of vibration dampening material (55) are located between the blade and the spindle (60).

4. A rotary cutting blade according to Clam 3, wherein the one or more layers of vibration dampening material (55) between the blade and the spindle is of varying thickness.

5. A rotary cutting blade according to Claim 3 when dependent on Claim 2, wherein the one or more layers of vibration dampening material (55) located between the blade and the spindle (60) are continuous with the one or more layers of vibration dampening material (35,40) located between the, or each, reinforcing member (20,25) and the blade.

6. A rotary cutting blade according to any preceding claim, wherein the vibration dampening material (35,40,55) is a: polymer, plastic, vinyl, copper, bitumen, resin or alloy.

7. A rotary cutting blade according to Claim 2, wherein the vibration dampening material (35,40) located between the blade and the reinforcing member (20,25) is of lesser dimension than the reinforcing member (20,25).

8. A rotary cutting blade according to any preceding claim, wherein the blade is made from steel.

9. A rotary cutting blade according to any preceding claim, wherein the, or each, reinforcing member (20,25) is made from steel.

10. A rotary cutting blade according to any preceding claim, wherein the, or each, reinforcing member (20,25) is attached to a respective outer face of the disc by spot welding, welding, screwing or gluing.

11. A rotary cutting blade according to any preceding claim, wherein the, or each, reinforcing member (20,25) is provided with one or more cut-outs (50) therethrough.

12. A rotary cutting blade according to Claim 11, wherein the, or each, cut-out (50) is filled with vibration dampening material.

## Patentansprüche

1. Drehschneidblatt für ein kraftbetriebenes Werkzeug, umfassend eine Scheibe mit einem oder mehreren um deren Umfang herum angeordneten Schneidelementen, wobei die Scheibe eine Sandwichkonstruktion mit einem Schwingungsdämpfungsmaterial (15) zwischen zwei äußeren Kernen (5, 10) aufweist,
**gekennzeichnet durch** ein Verstärkungselement (20, 25), das an mindestens einer Seite des Schneidblatts befestigt ist, wobei zum Reduzieren von Geräuschen und Vibrationen das oder jedes Verstärkungselement (20, 25) einen maximalen Durchmesser aufweist, der kleiner ist als der Durchmesser der Scheibe, so dass im Gebrauch die Scheibe nur in ihrem Bereich radial außerhalb des Verstärkungselementes oder der Verstärkungselemente (20, 25) schneidet.

2. Drehschneidblatt nach Anspruch 1, bei dem eine oder mehrere Schichten von Schwingungsdämpfungsmaterial (35, 40) zwischen dem oder jedem Verstärkungselement (20, 25) und dem Schneidblatt angeordnet sind.

3. Drehschneidblatt nach Anspruch 1 oder Anspruch 2, bei dem das Schneidblatt geeignet ist, mittels eines Montagelochs (30) auf eine Welle (60) des kraftgetriebenen Werkzeugs zu passen, und wobei im Gebrauch mit dem Schneidblatt auf der Welle ein oder mehrere Schichten von Schwingungsdämpfungsmaterial (55) zwischen dem Schneidblatt und der Welle (60) liegen.

4. Drehschneidblatt nach Anspruch 3, bei dem die eine oder mehreren Schichten von Schwingungsdämpfungsmaterial (55) zwischen dem Schneidblatt und der Welle von variierender Dicke ist.

5. Drehschneidblatt nach Anspruch 3, soweit rückbezogen auf Anspruch 2, bei dem die eine oder mehreren Schichten von Schwingungsdämpfungsmaterial (55) zwischen dem Schneidblatt und der Welle (60) durchgängig mit der einen oder den mehreren Schichten von Schwingungsdämpfungsmaterial (35, 40) zwischen dem oder jedem Verstärkungselement (20, 25) und dem Schneidblatt sind.

6. Drehschneidblatt nach einem der vorhergehenden Ansprüche, bei dem das Schwingungsdämpfungsmaterial (35, 40, 55) ist: ein Polymer, ein Kunststoff, Vinyl, Kupfer, Bitumen, ein Kunstharz oder eine Legierung.

7. Drehschneidblatt nach Anspruch 2, bei dem das Schwingungsdämpfungsmaterial (35, 40) zwischen dem Schneidblatt und dem Verstärkungselement (20, 25) von geringerer Dimension als das Verstärkungselement (20, 25) ist.

8. Drehschneidblatt nach einem der vorhergehenden Ansprüche, bei dem das Schneidblatt aus Stahl gefertigt ist.

9. Drehschneidblatt nach einem der vorhergehenden Ansprüche, bei dem das oder jedes Verstärkungselement (20, 25) aus Stahl gefertigt ist.

10. Drehschneidblatt nach einem der vorhergehenden Ansprüche, bei dem das oder jedes Verstärkungselement (20, 25) an einer betreffenden Außenseite der Platte durch Punktschweißen, Schweißen, Verschrauben oder Verkleben befestigt ist.

11. Drehschneidblatt nach einem der vorhergehenden Ansprüche, bei dem das oder jedes Verstärkungselement (20, 25) mit einem oder mehreren durchgehenden Ausschnitten versehen ist.

12. Drehschneidblatt nach Anspruch 11, bei dem der oder jeder Ausschnitt (50) mit Schwingungsdämpfungsmaterial gefüllt ist.

## Revendications

1. Lame de coupe rotative pour un outil électrique, comprenant un disque ayant un ou plusieurs éléments de coupe disposés autour de la circonférence de celui-ci, le disque étant d'une structure en sandwich comprenant un matériau d'amortissement de vibration (15) pris en sandwich entre deux âmes externes (5, 10), **caractérisée par** un élément de renforcement (20, 25) fixé à au moins une face de la lame, ce par quoi, pour réduire le bruit et la vibration, le ou chaque élément de renforcement (20, 25) a un diamètre maximal plus petit que le diamètre du disque de telle sorte qu'en utilisation le disque coupe uniquement dans la région de celui-ci radialement vers l'extérieur par rapport au ou aux éléments de renforcement (20, 25).

2. Lame de coupe rotative selon la revendication 1, dans laquelle une ou plusieurs couches de matériau d'amortissement de vibration (35, 40) sont situées entre le ou chaque élément de renforcement (20, 25) et la lame.

3. Lame de coupe rotative selon la revendication 1 ou la revendication 2, dans laquelle la lame est adaptée pour être montée sur une broche (60) de l'outil électrique en ayant un trou de montage (30), et dans laquelle, en utilisation, avec la lame montée sur la broche (60), une ou plusieurs couches de matériau d'amortissement de vibration (55) sont situées entre la lame et la broche (60).

4. Lame de coupe rotative selon la revendication 3, dans laquelle la ou les couches de matériau d'amortissement de vibration (55) entre la lame et la broche sont d'épaisseur variable.

5. Lame de coupe rotative selon la revendication 3 lorsqu'elle dépend de la revendication 2, dans laquelle la ou les couches de matériau d'amortissement de vibration (55) situées entre la lame et la broche (60) sont continues avec la ou les couches de matériau d'amortissement de vibration (35, 40) situées entre le ou chaque élément de renforcement (20, 25) et la lame.

6. Lame de coupe rotative selon l'une quelconque des revendications précédentes, dans laquelle le matériau d'amortissement de vibration (35, 40, 55) est un : polymère, plastique, vinyle, cuivre, bitume, résine ou alliage.

7. Lame de coupe rotative selon la revendication 2, dans laquelle le matériau d'amortissement de vibration (35, 40) situé entre la lame et l'élément de renforcement (20, 25) est de dimension inférieure à l'élément de renforcement (20, 25).

8. Lame de coupe rotative selon l'une quelconque des revendications précédentes, dans laquelle la lame est faite à partir d'acier.

9. Lame de coupe rotative selon l'une quelconque des revendications précédentes, dans laquelle le ou chaque élément de renforcement (20, 25) est fait à partir d'acier.

10. Lame de coupe rotative selon l'une quelconque des revendications précédentes, dans laquelle le ou chaque élément de renforcement (20, 25) est fixé à une face externe respective du disque par soudage par points, soudage, vissage ou collage.

11. Lame de coupe rotative selon l'une quelconque des revendications précédentes, dans laquelle le ou chaque élément de renforcement (20, 25) comporte une ou plusieurs découpes (50) à travers celui-ci.

12. Lame de coupe rotative selon la revendication 11, dans laquelle la ou chaque découpe (50) est remplie d'un matériau d'amortissement de vibration.
